# EUROPÄISCHE PATENTSCHRIFT

(11) **EP 3 827 486 B1**
(45) Veröffentlichungstag und Bekanntmachung des Hinweises auf die Patenterteilung: **13.09.2023**
(21) Anmeldenummer: 19739314.3
(22) Anmeldetag: 17.07.2019
(51) Int. Cl.: H01R 43/28, H02G 1/12

(54) **KABELVERARBEITUNGSMASCHINENSYSTEM UND VERFAHREN ZUM ENTFERNEN EINES ODER MEHRERER KABEL AUS EINER ENTNAHMEWANNE EINES KABELVERARBEITUNGSMASCHINENSYSTEMS**
CABLE PROCESSING MACHINE SYSTEM AND METHOD FOR REMOVING ONE OR MORE CABLES FROM A TRAY OF A CABLE PROCESSING MACHINE SYSTEM
SYSTÈME DE MACHINE DE TRAITEMENT DE CÂBLES ET PROCÉDÉ DE RÉCEPTION D'UN OU D'UNE PLURALITÉ DE CÂBLES DU BAC DE RÉCEPTION D'UN SYSTÈME DE MACHINE DE TRAITEMENT DU CÂBLE

(30) Priorität: 24.07.2018 EP 18185288
(43) Veröffentlichungstag der Anmeldung: 02.06.2021
(73) Patentinhaber: komax Holding AG, 6036 Dierikon (CH)
(72) Erfinder: CONTE, Alois, 6030 Ebikon (CH); FURRER, Nils, 8800 Thalwil (CH); FEUBLI, Dominik, 6010 Kriens (CH)
(74) Vertreter: Inventio AG
(86) Internationale Anmeldenummer: PCT/EP2019/069271
(87) Internationale Veröffentlichungsnummer: WO 2020/020727

(56) Entgegenhaltungen:
- EP-A1- 1 079 479
- EP-A1- 1 653 576
- EP-A2- 0 788 200
- US-A1- 2001 032 680

## Beschreibung

Die vorliegende Erfindung betrifft ein Kabelverarbeitungsmaschinensystem und ein Verfahren zum Entfernen eines oder mehrerer Kabel aus einer Entnahmewanne eines Kabelverarbeitungsmaschinensystems.

Gebräuchliche Kabelverarbeitungsmaschinen bzw. Kabelverarbeitungsmaschinensysteme können Lose von Kabeln bzw. Fertigungslose, also mehrere Stücke eines identisch konfektionierten Kabels, vollautomatisch produzieren. Jedoch erfolgt das Entnehmen der Fertigungslose üblicherweise durch den Maschinenbediener von Hand.

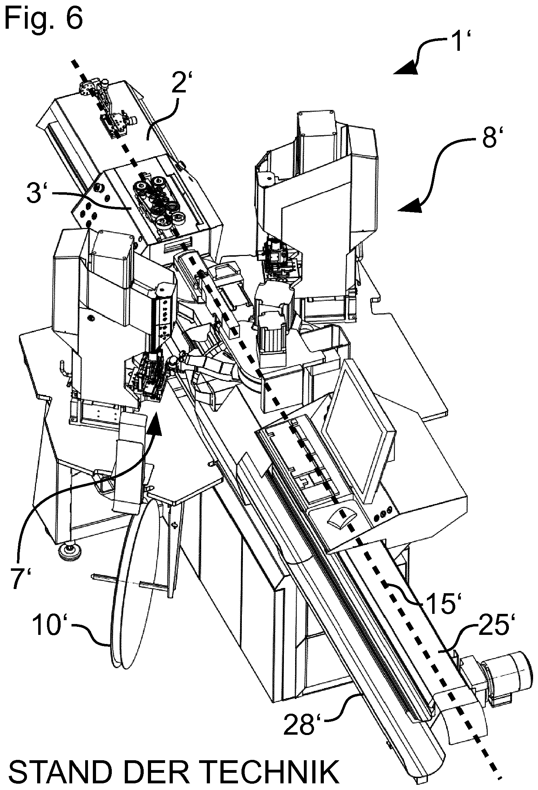

Fig. 6 zeigt eine typische Kabelverarbeitungsmaschine vom Typ Schwenkmaschine eines Kabelverarbeitungsmaschinensystems gemäß dem Stand der Technik. Die Funktionsweise und der Aufbau sind beispielsweise in der Patentschrift EP 2 442 413 B1 dargestellt.

Die Kabelverarbeitungsmaschine bzw. das Kabelverarbeitungsmaschinensystem 1' umfasst eine Richteinheit 2' zum Ausrichten des Kabels, eine Kabelfördereinrichtung 3' zum Fördern bzw. Transportieren des Kabels, zwei Crimppressen 7', 8` zum Verbinden eines Crimpkontakts von einer Kontaktrolle 10' mit dem Kabel. Zudem umfasst die Kabelverarbeitungsmaschine bzw. das Kabelverarbeitungsmaschinensystem ein Förderband 25', das das Kabel entlang der Kabelverarbeitungsachse 15' bewegt.

Die Anzahl der zu produzierenden gleichen Kabel wird üblicherweise in kleinere Fertigungslose unterteilt, welche einzeln der Kabelverarbeitungsmaschine entnommen werden. Gebräuchliche Kabelverarbeitungsmaschinen verfügen dazu über eine Kabelablage, in welche die fertig konfektionieren bzw. fertig verarbeiteten Kabel abgelegt werden, bis die Stückzahl eines Fertigungslos erreicht ist, und eine Entnahmewanne 28', aus welcher das Los von Hand entnommen werden kann.

Oberhalb der Kabelablage befindet sich ein Förderband 25', welches das zu verarbeitende Kabel während dem Transportvorgang gestreckt hält. Bei Abschluss der Verarbeitung fällt das Kabel vom Transportband in die Kabelablage. Die Kabelablage kann geschwenkt werden, wodurch die Kabel eines Fertigungsloses in die Entnahmewanne 28' fallen. Die Kabel müssen aus der Entnahmewanne 28' manuell entnommen werden und die Entnahme der Lose aus der Entnahmewanne 28' muss durch den Bediener bestätigt werden, was zur Folge hat, dass die Kabelverarbeitungsmaschine nach jedem gefertigten Los stoppt, bis das Los durch den Bediener aus der Entnahmewanne 28` entnommen und dies quittiert wurde. Oftmals betreut ein Bediener mehrere Kabelverarbeitungsmaschinen. Dadurch steht die Kabelverarbeitungsmaschine wesentlich länger still, als der eigentliche Entnahmevorgang dauert.

Damit kurze Kabel besser entnommen werden können, gibt es Entnahmewannen, welche vor der Entnahme in Längsrichtung parallel zu der Kabelverarbeitungsachse 15' bewegt werden können. Die Patentschrift EP 2 442 413 B1 beschreibt eine Kabelablage im Detail.

Es kann unter anderem ein Bedarf an einem Kabelverarbeitungsmaschinensystem bzw. an einem Verfahren bestehen, bei dem bzw. mittels dem Kabel technisch einfach automatisiert aus der Entnahmewanne 28' entnommen werden können.

Die Patentschrift EP0788200 A2 offenbart ein Kabelverarbeitungsmaschinensystem gemäß dem Oberbegriff von Anspruch 1.

Einem solchen Bedarf kann durch ein Kabelverarbeitungssystem bzw. ein Verfahren gemäß dem unabhängigen Anspruch 1 bzw. dem unabhängigen Anspruch 13 entsprochen werden. Vorteilhafte Ausführungsformen sind in den abhängigen Ansprüchen definiert. Gemäß einem Aspekt der Erfindung wird ein Kabelverarbeitungsmaschinensystem vorgeschlagen umfassend eine Kabelverarbeitungsmaschine zum Verarbeiten eines Kabels, eine Kabelablage zum Aufnehmen von von der Kabelverarbeitungsmaschine verarbeiteten Kabeln, und eine Entnahmewanne, wobei die Kabelablage derart schwenkbar ausgebildet ist, dass Kabel aus der Kabelablage beim Schwenken der Kabelablage in die Entnahmewanne gelangen, dadurch gekennzeichnet, dass die Entnahmewanne ein bewegliches Austransportband zum Befördern der Kabel entlang einer Transportrichtung weg von der Kabelverarbeitungsmaschine zu einem Ende der Entnahmewanne umfasst.

Ein Vorteil hiervon ist, dass das Kabel bzw. die Kabel bzw. das Fertigungslos von Kabeln üblicherweise technisch einfach an eine Position transportiert werden kann, an der das Kabel oder die Kabel technisch einfach und schnell automatisiert, z.B. mittels eines Greifarms, der Entnahmewanne entnommen werden können. Insbesondere können das Kabel oder die Kabel in der Regel so weit mittels des Austransportbands bewegt werden, dass diese teilweise über die Entnahmewanne hinausstehen. Hierdurch können die Kabel typischerweise noch leichter automatisiert aus der Entnahmewanne entfernt werden. Somit muss der Betrieb der Kabelverarbeitungsmaschine in der Regel nicht unterbrochen werden.

Gemäß einem zweiten Aspekt der Erfindung wird ein Verfahren zum Entfernen eines oder mehrerer Kabel aus einer Entnahmewanne eines Kabelverarbeitungsmaschinensystems, insbesondere aus einer Entnahmewanne eines Kabelverarbeitungsmaschinensystems wie vorstehend beschrieben, vorgeschlagen, wobei das Verfahren folgende Schritte umfasst: Bewegen eines oder mehrerer in der Entnahmewanne befindlicher Kabel mittels eines Austransportbands weg von einer Kabelverarbeitungsmaschine des Kabelverarbeitungsmaschinensystems zu einem Ende der Entnahmewanne; und Greifen und Entnehmen des oder der sich am Ende der Entnahmewanne befindlichen Kabel aus der Entnahmewanne mittels eines Greifarms.

Vorteilhaft an diesem Verfahren ist, dass das Kabel bzw. die Kabel bzw. das Fertigungslos von Kabeln typischerweise technisch einfach an eine Position transportiert wird, an der das Kabel oder die Kabel technisch einfach und schnell automatisiert der Entnahmewanne entnommen wird. Insbesondere können das Kabel oder die Kabel in der Regel so weit mittels des Austransportbands bewegt werden, dass diese teilweise über die Entnahmewanne hinausstehen. Hierdurch können die Kabel üblicherweise noch leichter automatisiert mittels des Greifarms aus der Entnahmewanne entfernt werden. Somit muss der Betrieb der Kabelverarbeitungsmaschine typischerweise nicht unterbrochen werden.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform des Kabelverarbeitungsmaschinensystems weist die Entnahmewanne Seitenwände auf. Hierdurch wird/werden das Kabel bzw. die Kabel typischerweise besonders sicher in der Entnahmewanne geführt, während das Kabel oder die Kabel mittels des Austransportbands zu einem Ende der Entnahmewanne transportiert wird/werden.

Gemäß einer Ausführungsform des Kabelverarbeitungsmaschinensystems sind die Seitenwände mit dem Austransportband derart fest verbunden, dass die Seitenwände zusammen mit dem Austransportband bewegt werden. Hierdurch können die Seitenwände technisch einfach mit derselben Geschwindigkeit wie das Austransportband bewegt werden. Zudem wird ein Verklemmen bzw. Einklemmen eines Kabels zwischen einer der Seitenwände und dem Austransportband im Wesentlichen ausgeschlossen.

Gemäß einer Ausführungsform des Kabelverarbeitungsmaschinensystems weisen die Seitenwände in einem Querschnitt parallel zu der Oberfläche des Austransportbands jeweils eine ziehharmonikaartige Form auf, so dass die Seitenwände entlang einer Richtung, die parallel zu der Transportrichtung verläuft, zumindest teilweise gedehnt und gestaucht werden können, und die Entnahmewanne weist eine Umlenkrolle zum Umlenken des Austransportbands und der Seitenwände auf. Hierdurch können das Austransportband und die Seitenwände typischerweise technisch einfach ohne das Auftreten von größeren mechanischen Spannungen in den Seitenwänden gewendet bzw. umgelenkt werden, so dass das Austransportband und die Seitenwände z.B. auf einer Unterseite der Entnahmewanne in eine Richtung, die antiparallel zu der Transportrichtung bzw. der Bewegungsrichtung der Kabel auf dem Austransportband verläuft, bewegt werden können.

Gemäß einer Ausführungsform des Kabelverarbeitungsmaschinensystems weist die Entnahmewanne an einem Ende der Entnahmewanne mindestens einen Bündelgreifer, insbesondere zwei Bündelgreifer, zum Greifen und Halten von einem oder mehreren Kabeln auf. Hierdurch kann das Kabel bzw. können die Kabel üblicherweise technisch einfach am Ende der Entnahmewanne bzw. am Ende des Austransportbands gehalten werden. Somit wird ein Herausfallen aus der Entnahmewanne technisch einfach verhindert.

Gemäß einer Ausführungsform des Kabelverarbeitungsmaschinensystems ist der Bündelgreifer derart ausgebildet oder sind die Bündelgreifer derart ausgebildet, dass die Greifkraft, mit der jeweilige Bündelgreifer das eine oder die mehreren Kabeln greift, einstellbar ist. Ein Vorteil hiervon ist, dass das Kabel üblicherweise durch den jeweiligen geschlossenen Bündelgreifer hindurchgleiten kann. Somit kann Kabel typischerweise technisch einfach geführt werden.

Gemäß einer Ausführungsform des Kabelverarbeitungsmaschinensystems ist ein Abstand zwischen den Bündelgreifern in der Transportrichtung zum Spannen eines Teils des Kabels oder der Kabel zwischen den Bündelgreifern vergrößerbar und verkleinerbar. Vorteilhaft hieran ist, dass ein Teil des Kabels bzw. der Kabel üblicherweise technisch einfach zwischen den Bündelgreifern gespannt werden kann. Hierdurch wird das Ergreifen der Kabel durch einen Greifarm oder ähnliches, der den gespannten Teil des Kabels bzw. der Kabel zwischen Bündelgreifern ergreift, in der Regel technisch vereinfacht.

Gemäß einer Ausführungsform des Kabelverarbeitungsmaschinensystems weist die Entnahmewanne an dem Ende des Austransportbands, zu dem die Kabel mittels des Austransportbands befördert werden können, eine relativ zur Kabelablage unbewegliche Auflagefläche zum Unterstützen eines Teils des Kabels oder der Kabel auf. Vorteilhaft hieran ist, dass die Kabel über das Ende des Austransportbands hinaus bewegt werden können, typischerweise ohne dass sich mit dem Kabel verbundenen Kontakte, z.B. Crimpkontakte, verfangen können. Zudem wird durch die Reibung zwischen der Auflagefläche und dem Kabel bzw. den Kabel in der Regel verhindert, dass diese am Ende der Entnahmewanne aus der Entnahmewanne fallen. Durch die Auflagefläche bleiben sie typischerweise am Ende der Entnahmewanne liegen, wobei ein Teil des Kabels oder der Kabel auf der Auflagefläche ruht bzw. liegt.

Gemäß einer Ausführungsform des Kabelverarbeitungsmaschinensystems weist die Entnahmewanne die Auflagefläche seitlich begrenzende Seitenwände auf. Vorteilhaft hieran ist, dass die Kabel auf der Auflagefläche typischerweise besonders sicher gehalten werden und vor einem seitlichen Herunterfallen besonders gut geschützt sind.

Gemäß einer Ausführungsform des Kabelverarbeitungsmaschinensystems ist das Austransportband der Entnahmewanne parallel zu einer Richtung bewegbar, die in eine Längsrichtung der Kabelablage verläuft, wobei die Kabelablage ihre größte Erstreckung entlang der Längsrichtung aufweist. Vorteilhaft hieran ist, dass das Kabel oder die Kabel auf dem Austransportband typischerweise technisch einfach von der Kabelverarbeitungsmaschine weg bewegbar ist bzw. sind.

Gemäß einer Ausführungsform des Kabelverarbeitungsmaschinensystems ist die Entnahmewanne derart angeordnet und ausgebildet, dass die Entnahmewanne sich weiter von der Kabelverarbeitungsmaschine weg erstreckt als die Kabelablage. Durch das Hinausstehen der Entnahmewanne über die Kabelablage hinaus befinden sich die an das von der Kabelverarbeitungsmaschine abgewandte Ende transportierten Kabel typischerweise an einer Position, an der sie automatisiert gegriffen werden können, ohne dass die Kabelablage eine Behinderung der Bewegung des Greifarms darstellt. Somit können die Kabel in der Regel noch einfacher automatisiert am Ende der Entnahmewanne ergriffen werden.

Gemäß einer Ausführungsform des Kabelverarbeitungsmaschinensystems erstreckt sich die Transportrichtung parallel zu einer Kabelverarbeitungsachse, entlang der die Kabel während der Verarbeitung der Kabel durch die Kabelverarbeitungsmaschine bewegt werden. Hierdurch gelangen die Kabel in der Regel technisch besonders einfach derart in die Kabelablage, dass die Kabel ohne Drehung der Kabel oder ähnliches mittels des Transportbands entlang ihrer Längsrichtung (bzw. entlang ihrer größten Ausdehnung) transportiert bzw. befördert werden können.

Gemäß einer Ausführungsform des Verfahrens werden das Kabel oder die Kabel von einem Bündelgreifer oder zwei Bündelgreifern an einem Ende der Entnahmewanne gehalten, während der Greifarm das oder die Kabel ergreift. Vorteilhaft an diesem Verfahren ist, dass ein Teil des Kabels bzw. der Kabel üblicherweise technisch besonders einfach von einem Greifarm oder ähnlichem ergriffen werden kann.

Gemäß einer Ausführungsform des Verfahrens wird/werden das Kabel oder die Kabel von zwei Bündelgreifern unter Spannung gehalten, während der Greifarm das oder die Kabel ergreift. Ein Vorteil dieses Verfahrens ist, dass das Ergreifen der Kabel durch einen Greifarm oder ähnliches, der den gespannten Teil des Kabels bzw. der Kabel zwischen Bündelgreifern ergreift, in der Regel technisch vereinfacht ist.

Es wird darauf hingewiesen, dass einige der möglichen Merkmale und Vorteile der Erfindung hierin mit Bezug auf unterschiedliche Ausführungsformen des Kabelverarbeitungssystems bzw. des Verfahrens zum Entfernen eines oder mehrerer Kabel aus einer Entnahmewanne einer Kabelverarbeitungsmaschine beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht einer Ausführungsform des erfindungsgemäßen Kabelverarbeitungssystems mit einer Entnahmewanne;
- Fig. 2 zeigt: eine Detailansicht der Entnahmewanne aus Fig. 1;
- Fig. 3 zeigt: eine Detailansicht einer Entnahmewanne einer zweiten Ausführungsform des erfindungsgemäßen Kabelverarbeitungssystems;
- Fig. 4 zeigt: eine weitere Detailansicht der Entnahmewanne aus Fig. 3;
- Fig. 5 zeigt: eine Detailansicht der Entnahmewanne aus Fig. 3 bzw. Fig. 4 mit einem Greifarm;
- Fig. 6 zeigt: ein Kabelverarbeitungssystem gemäß dem Stand der Technik.

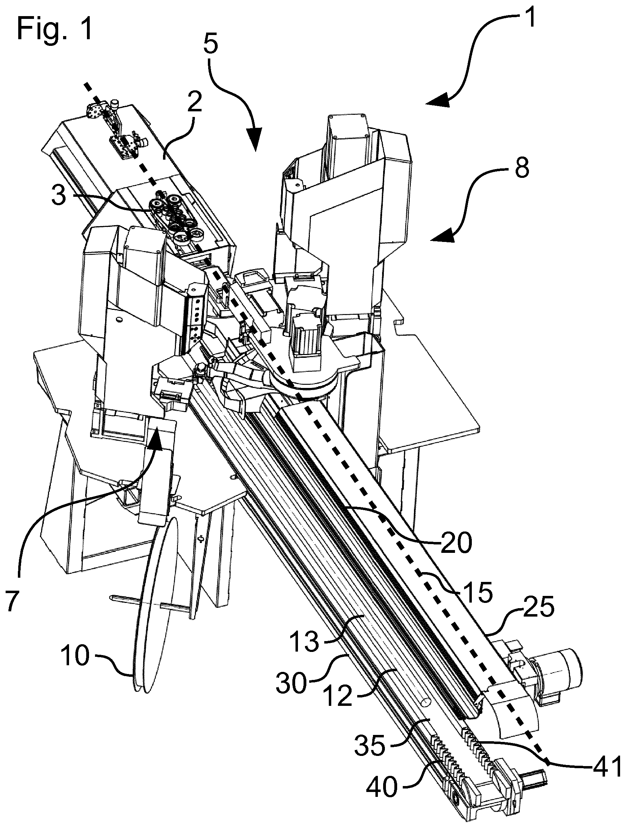

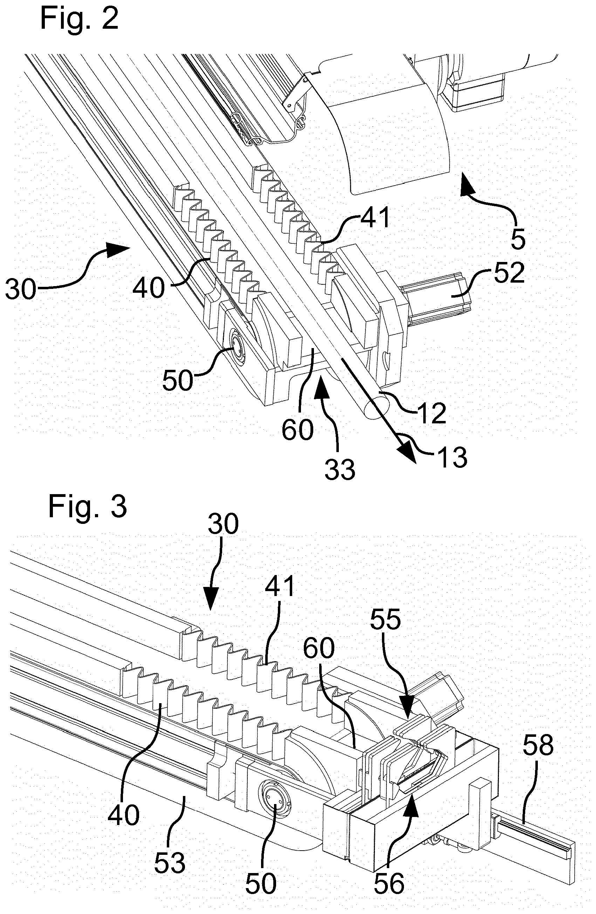

Die Figuren sind lediglich schematisch und nicht maßstabsgetreu. Gleiche Bezugszeichen bezeichnen in den verschiedenen Figuren gleiche oder gleichwirkende Merkmale Fig. 1 zeigt eine perspektivische Ansicht einer Ausführungsform des erfindungsgemäßen Kabelverarbeitungssystems mit einer Entnahmewanne 30. Fig. 2 zeigt eine Detailansicht der Entnahmewanne 30 aus Fig. 1.

Das Kabelverarbeitungsmaschinensystem 1 umfasst eine Richteinheit 2 zum Ausrichten des Kabels 12, eine Kabelfördereinrichtung 3 zum Fördern bzw. Transportieren des Kabels 12, zwei Crimppressen 7, 8 zum Verbinden eines Crimpkontakts von einer Kontaktrolle 10 mit dem Kabel 12. Zudem umfasst die Kabelverarbeitungsmaschine 5 bzw. das Kabelverarbeitungsmaschinensystem 1 ein Förderband 25, das das Kabel 12 entlang der Kabelverarbeitungsachse 15 bewegt. Darüber hinaus umfasst das Kabelverarbeitungsmaschinensystem 1 eine Entnahmewanne 30.

Schräg oberhalb der Kabelablage 20 befindet sich ein Förderband 25, welches das zu verarbeitende Kabel 12 während dem Transportvorgang durch die Kabelverarbeitungsmaschine 5 bzw. während der Verarbeitung des Kabels 12 in der Kabelverarbeitungsmaschine 5 gestreckt hält. Bei bzw. nach Abschluss der Verarbeitung fällt das Kabel 12 vom Transportband in die Kabelablage 20. Die Kabelablage 20 kann geschwenkt bzw. gekippt werden, wodurch die Kabel 12 eines Fertigungsloses aus der Kabelablage 20 in die Entnahmewanne 30 fallen.

Die Entnahmewanne 30 umfasst ein Austransportband 35. Das Austransportband 35 ist (auf der Oberseite der Entnahmewanne 30) in eine Transportrichtung 13 parallel zu der Kabelverarbeitungsachse 15 (=die Achse entlang die Längsrichtung der Kabel 12 während der Verarbeitung in der Kabelverarbeitungsmaschine 5) bzw. Kabelablage 20 weg von der Kabelverarbeitungsmaschine 5 bewegbar.

Das Austransportband 35 ist ein Endlosband, das am vorderen Ende 33 der Entnahmewanne 30 um eine Umlenkrolle 50 umgelenkt wird und auf der Unterseite der Entnahmewanne 30 zurückläuft. Seitenwände 40, 41, die das Austransportband 35 seitlich begrenzen, werden ebenfalls mittels der Umlenkrolle 50 umgelenkt und laufen auf der Unterseite der Entnahmewanne 30 zurück.

Das Austransportband 35 wird mittels eines Vorschubmotors 52 angetrieben. Der Vorschubmotor 52 treibt die Umlenkrolle 50 an.

An dem gegenüberliegenden Ende des Austransportbands 35 befindet sich eine weitere Umlenkrolle, an der bzw. mittels der das Austransportband 35 und die Seitenwände 40, 41 wieder umgelenkt werden und auf diese Weise wieder auf die Oberseite der Entnahmewanne 30 gelangen, wo sich das Austransportband 35 wieder in Transportrichtung 13 bewegt.

Eine der beiden Umlenkrollen 50 kann linear parallel zu der Transportrichtung 13 verschoben werden, um das Austransportband 35 und/oder die Seitenwände 40, 41 zu spannen.

Das Los von Kabeln 12 ist in den Zeichnungen jeweils simplifiziert durch einen zylindrischen Körper dargestellt. Das Los von Kabeln 12 kann z.B. 5-20, insbesondere gleichartig verarbeitete, Kabel 12 umfassen.

An einem Ende des Austransportbands 35, genauer gesagt an dem der Kabelverarbeitungsmaschine 5 abgewandten Ende des Austransportbands 35, ist eine Auflagefläche 60 ausgebildet, die auch das Ende 33 der Entnahmewanne 30 bildet. Die Auflagefläche 60 ist starr relativ zu der Kabelverarbeitungsmaschine 5 angeordnet, d.h. das Austransportband 35 bewegt sich relativ zu der Auflagefläche 60. Die Auflagefläche 60 weist ebenfalls Seitenwände 65, 66 auf, die relativ zu der Auflagefläche 60 unbeweglich ausgebildet sind. Die Seitenwände 65, 66 der Auflagefläche 60 können ein Teil der Verkleidung 53 sein, in die die Seitenwände 40, 41 des Austransportbands 35 bewegt werden, bevor sie mittels der Umlenkrolle 50 um ca. 180° umgelenkt werden.

Das Austransportband 35 bewegt die Kabel 12 soweit, dass diese teilweise auf dem Austransportband 35 liegen, teilweise auf der Auflagefläche 60 liegen und teilweise über die Entnahmewanne 30 hinausstehen, wie dies in Fig. 3 gezeigt ist. Die Aufnahmewanne sorgt durch die Reibung zwischen den Kabeln 12 einerseits und der Auflagefläche 60 andererseits dafür, dass auch bei weiterer Bewegung des Austransportbands 35 die Kabel 12 nicht weiter über das Ende 33 der Entnahmewanne 30 transportiert werden und somit nicht aus der Entnahmewanne 30 fallen.

Das Austransportband 35 kann ein Flachriemen sein.

Die Entnahmewanne 30 weist zwei Seitenwände 40, 41 auf, die das Innere der Entnahmewanne 30 zur Seite hin begrenzen. Die Seitenwände 40, 41 sind mit dem Austransportband 35 derart fest verbunden, dass beim Bewegen des Austransportbands 35 die Seitenwände 40, 41 mitbewegt werden. Durch Bewegen des Austransportbands 35 werden die Seitenwände 40, 41 somit auch bewegt werden.

Die Seitenwände 40, 41 weisen jeweils eine derartige Höhe auf, dass sie höher sind als die Höhe des Kabels 12 bzw. des Loses von Kabeln 12. Insbesondere können die Seitenwände 40, 41 eine Höhe aufweisen, die mindestens der Hälfte der Breite des Austransportbands 35 entspricht. Die Breite des Austransportbands 35 verläuft horizontal und senkrecht zur Transportrichtung 13. Hierdurch können Fertigungslose, die jeweils eine große Stückzahl umfassen, mittels der Entnahmewanne 22 sicher transportiert werden.

Die Seitenwände 40, 41 können balgartig bzw. als Wellkanten ausgebildet sein.

Die Seitenwände 40, 41 sind jeweils in sich geschlossen und werden über die Umlenkrolle 50 zusammen mit dem Austransportband 35 um ca. 180° umgelenkt, so dass sie auf der Unterseite der Entnahmewanne 30 zusammen mit dem Austransportband 35 zurück laufen, d.h. entgegengesetzt zur Transportrichtung 13. Die Umlenkung der Seitenwände 40, 41 und/oder des Austransportbands 35 und die Rückführung der Seitenwände 40, 41 und/oder des Austransportbands 35 finden in einer Verkleidung 53 statt, so dass ein unbeabsichtigtes Berühren der Seitenwände 40, 41 und/oder des Austransportbands 35 während der Umlenkung oder während der Rückführung in Richtung der Kabelverarbeitungsmaschine 5 im Wesentlichen ausgeschlossen ist.

Die Seitenwände 40, 41 werden zusammen mit dem Austransportband 35 umgelenkt.

Die Seitenwände 40, 41 weisen in einem Querschnitt parallel zu der Oberfläche des Austransportbands 35 die Form eines beweglichen Teils einer Ziehharmonika auf. In den Zeichnungen ist jeweils nur ein Teil der Seitenwand 40, 41 aus Darstellungsgründen als ziehharmonikaartige Seitenwand dargestellt. Die Seitenwände 40, 41 weisen jedoch über ihre komplette Länge eine solche ziehharmonikaartige Form auf. Dies bedeutet, dass die Seitenwände 40, 41 über die gesamte Länge des Transportbands 35 eine solche ziehharmonikaartige Form aufweisen.

Durch diese Form kann die Länge der jeweiligen Seitenwand 40, 41 auf einer dem Austransportband 35 abgewandten Seite (sozusagen der obere Teil der jeweiligen Seitenwand 40, 41) parallel zu der Transportrichtung 13 vergrößert und verkleinert werden. Der jeweils dem Austransportband 35 nächste Teil der Seitenwände 40, 41 ist fest bzw. starr mit dem Austransportband 35 verbunden, so dass sich dieser Teil in der Länge parallel zu der Transportrichtung 13 im Wesentlichen nicht verändern kann.

Das Austransportband 35 und die Seitenwände 40, 41 können einstückig ausgebildet sein. Vorstellbar ist auch, dass die Seitenwände 40, 41 mit dem Austransportband 35 verschweißt sind. Auch anderer Arten der festen Verbindung zwischen Austransportband 35 und den Seitenwänden 40, 41, wie z.B. Verkleben, Vernieten oder ähnliches, sind vorstellbar.

Beim Umlenken um die Umlenkrolle 50 müssen die Seitenwände 40, 41 bzw. der Teil der Seitenwände 40, 41, der dem Austransportband 35 abgewandt ist (der obere Teil der jeweiligen Seitenwand 40, 41), einen längeren Weg zurücklegen als das Austransportband 35, da der obere Teil der jeweiligen Seitenwand 40, 41 während des Umlenkens einen größeren Abstand zu der Umlenkrolle 50 aufweist als das Austransportband 35. Durch die ziehharmonikaartige Form der Seitenwände 40, 41 treten beim Umlenken der Seitenwände 40, 41 zusammen mit dem Austransportband 35 um die Umlenkrolle 50 keine großen mechanischen Spannungen in den Seitenwänden 40, 41 auf, da sich die Länge der Seitenwände 40, 41 bzw. des Teils der Seitenwände 40, 41, der dem Austransportband 35 bzw. der Umlenkrolle 50 abgewandt ist, beim Umlenken vergrößert. Nach dem Umlenken verkleinert sich die Länge wieder auf die Länge vor dem Umlenken. Somit wird ein Brechen und/oder Reißen der Seitenwände 40, 41 beim Umlenken sowie ein Ermüden des Materials der Seitenwände 40, 41 durch das Umlenken um die Umlenkrolle 50 sicher und technisch einfach verhindert.

Vorstellbar ist jedoch auch, dass die Seitenwände 40, 41 feststehend sind, d.h. nicht bewegt werden. Beispielsweise können die Seitenwände 40, 41 jeweils ein feststehendes Blech oder ähnliches aufweisen.

Das Austransportband 35 und/oder die Seitenwände 40, 41 können einen Kunststoff (z.B. Polyvinylchlorid (PVC) und/oder Polyurethan (PU)) umfassen oder aus diesem bestehen.

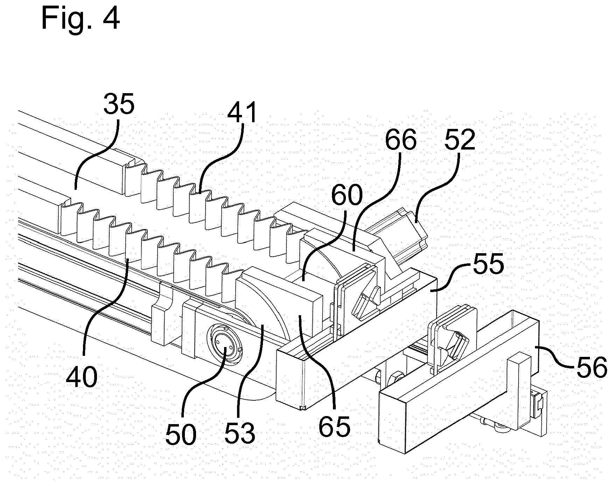

Fig. 3 zeigt eine Detailansicht einer Entnahmewanne 30 einer zweiten Ausführungsform des erfindungsgemäßen Kabelverarbeitungssystems. Fig. 4 zeigt eine weitere Detailansicht der Entnahmewanne 30 aus Fig. 3.

Die zweite Ausführungsform unterscheidet sich von der ersten Ausführungsform lediglich dadurch, dass die Entnahmewanne 30 zusätzlich zwei Bündelgreifer 55, 56 umfasst, die an einer Schiene 58 befestigt sind. Der von dem Austransportband 35 entferntere Bündelgreifer 56 der beiden Bündelgreifer 55, 56 ist entlang der Schiene 58 bewegbar, so dass der Abstand zwischen dem Bündelgreifer 55, der sich näher an dem Austransportband 35 befindet, und dem weiter vom Austransportband 35 befindlichen Bündelgreifer 56 vergrößerbar und verkleinerbar ist. Die Schiene verläuft parallel zu der Transportrichtung 13.

Einer der beiden Bündelgreifer 55, 56 befindet sich unmittelbar benachbart zu der Auflagefläche 60.

In Fig. 3 ist der Abstand der Bündelgreifer 55, 56 zueinander so klein wie möglich. In Fig. 4 ist der Abstand der Bündelgreifer 55, 56 zueinander so groß wie möglich. Der von dem Austransportband 35 weiter entfernte Bündelgreifer 56 befindet sich am äußersten Ende der Schiene 58.

Die Bündelgreifer 55, 56 umfassen jeweils zwei Backen, die sich in einer geöffneten Position (siehe Fig. 3) befinden können und die sich in einer geschlossenen Position (siehe Fig. 4) befinden können. In der geöffneten Position weist der Bündelgreifer 55, 56 bzw. die Backen des Bündelgreifers 55, 56 nach oben hin eine Öffnung auf. In der geschlossenen Position umgeben beide Backen des Bündelgreifers 55, 56 die von dem Bündelgreifer 55, 56 gehaltenen Kabel 12.

Die Bündelgreifer 55, 56 können pneumatisch und/oder mit Elektromotoren geöffnet bzw. geschlossen werden. Insbesondere bei einem Antrieb der Bündelgreifer 55, 56 mittels eines Elektromotors sind die Backen in einer Vielzahl von Zwischenstellungen zwischen ganz geöffnet und ganz geschlossen positionierbar. Die verschiedenen Zwischenpositionen können einprogrammiert werden bzw. sein.

Die Kraft, mit der die Bündelgreifer 55, 56 die Kabel 12 greifen kann eingestellt werden, so dass die Kabel 12, während sie von den Bündelgreifern 55, 56 gehalten werden, in den Bündelgreifern 55, 56 gleiten bzw. sich relativ zu dem jeweiligen Bündelgreifer 55, 56 bewegen können.

Die Bündelgreifer 55, 56 umschließen jeweils das Kabel 12 bzw. die Kabel 12 in der geschlossenen Position. Die Bündelgreifer 55, 56 formen die mehreren Kabel 12 zu einem kompakten Bündel, so dass dieses von einem Greifarm 70 technisch einfach ergriffen und gehalten werden kann und vom Greifarm 70 aus der Entnahmewanne 30 transportiert werden kann.

Das Bündel bzw. Los von Kabeln 12 bzw. ein Teil hiervon kann zwischen den Bündelgreifern 55, 56 gespannt werden, so dass dieses von einem Greifarm 70 technisch einfach ergriffen werden kann, indem der Greifarm 70 zwischen die Bündelgreifer 55, 56 greift und auf diese Weise die Kabel 12 ergreift. Nachdem der Greifarm 70 die Kabel 12 ergriffen hat, öffnen sich die beiden Bündelgreifer 55, 56, so dass der Greifarm 70 die gehaltenen Kabel 12 bzw. das Los von Kabel 12 nach oben weg aus der Entnahmewanne 30 bzw. den Bündelgreifern 55, 56 bewegen kann.

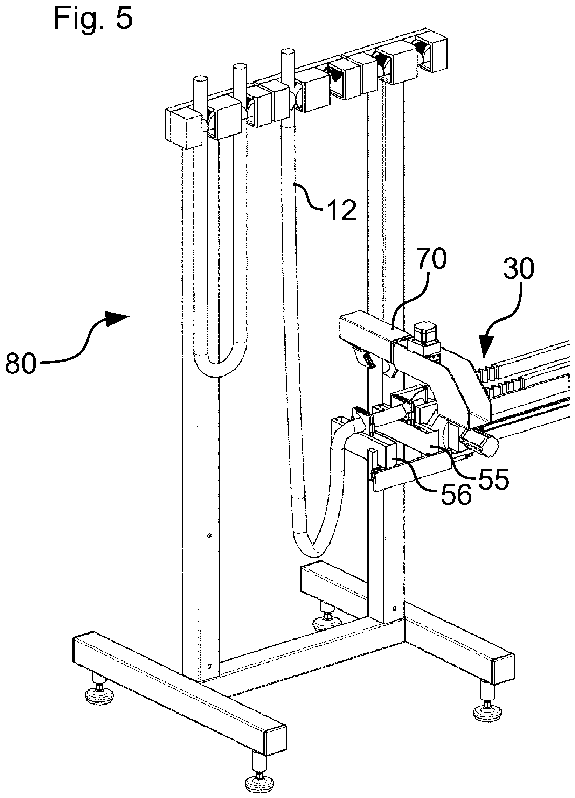

Fig. 5 zeigt eine Detailansicht der Entnahmewanne 30 aus Fig. 3 bzw. Fig. 4 mit einem Greifarm 70.

In Fig. 5 sind die jeweiligen Fertigungslose von Kabeln 12 bzw. Bündel von Kabeln 12 zur zeichnerischen Vereinfachung als Zylinder dargestellt.

In Fig. 5 links ist bereits ein Kabelbündel bzw. ein Los von Kabeln 12 mit jeweils einem Teil nahe seinen Enden in einer Halterung eines Kabelgestells 80 befestigt bzw. eingeklemmt.

Fig. 5 zeigt eine Situation, nachdem bereits das vordere Ende eines weiteren Kabelbündels bzw. eines weiteren Los von Kabeln 12 an ein Ende der Entnahmewanne 30 bewegt wurde, von einem Greifarm 70 ergriffen wurde und in einer Aufnahme bzw. Halterung eines Kabelgestells 80 befestigt wurde.

Der Greifarm 70 ist im Raum mittels einer nicht dargestellten Vorrichtung bewegbar.

Das hintere Ende des Kabelbündels bzw. des Los von Kabeln 12 ist von den beiden Bündelgreifern 55, 56 bzw. den Backen der beiden Bündelgreifer 55, 56 in geschlossener Position gehalten, wobei sich die Bündelgreifer 55, 56 soweit wie möglich entfernt zueinander befinden. Zuvor hat der äußere, d.h. der von dem Austransportband 35 weiter entfernte, Bündelgreifer 56 einen Teil des Kabelbündels ergriffen, während sich der innere Bündelgreifer 55 in teilweise geschlossenen Position befand und die Kabel 12 durch den inneren Bündelgreifer 55 geglitten sind. Durch die Reibung zwischen den Kabeln 12 und dem inneren Bündelgreifer 55 hat sich der Teil des Kabels 12 zwischen den Bündelgreifern 55, 56 gespannt und hängt nicht schlaff durch, sondern verläuft im Wesentlichen waagrecht. Hierdurch kann der Greifarm 70 diesen Teil technisch einfach ergreifen und halten.

Nach dem Greifen des hinteren Teils des Kabels 12 öffnen sich die beiden Bündelgreifer 55, 56, so dass nun das Kabel 12 durch den Greifarm 70 in einer Halterung bzw. Befestigung des Kabelgestells 80 befestigt bzw. eingeklemmt werden.

Der automatisierte Austransport der Fertigungslose von Kabeln 12 bzw. der Kabel 12 erlaubt es, der Kabelverarbeitungsmaschine 5 im Ablauf nachgelagerte Systeme für die Lagerung und/oder den Transport der Fertigungslose bzw. Kabel 12 automatisch zu beschicken. Diese Systeme können, je nach dem gewünschten Logistikablauf sehr unterschiedlich ausgestaltet sein. Beispielsweise können die Fertigungslose bzw. die Kabel 12, nachdem diese aus der Entnahmewanne 30 bewegt wurden, in ortsfeste Zwischenspeicher, welche eine begrenzte Anzahl von Losen aufnehmen können und/oder transportable Speicher wie Kabelgestelle mit Rollen (siehe Fig. 5), Transportboxen oder ähnliches bewegt werden, die dazu dienen die Kabel 12 bzw. Fertigungslose zu einer nachfolgenden Verarbeitungsstation zu bringen.

Dadurch, dass die Entnahmewanne 30 die Kabel 12 bzw. Lose von Kabeln 12 von der Kabelverarbeitungsmaschine 5 weg bewegt, können die Kabel 12 bzw. Lose von Kabeln 12 technisch besonders einfach automatisiert, z.B. mittels eines Greifarms 70, der Entnahmewanne 30 entnommen werden. Die Kabelverarbeitungsmaschine 5 behindert nämlich dann den Greifarm 70 nicht bei seinen Bewegungen.

Insbesondere dadurch, dass nach dem Transportieren des Kabels 12 bzw. der Kabel 12 ein Teil des Kabels 12 bzw. der Kabel 12 über das Ende 33 der Entnahmewanne 30 hinaussteht, kann das Kabel 12 bzw. können die Kabel 12 von einem technisch einfach ausgebildeten Greifarm ergriffen werden.

Die Strecke, die das Fertigungslos von Kabeln 12 bzw. die Kabel 12 mittels des Austransportbands 35 bewegt werden muss, um beispielsweise zum Ende des Austransportbands 35 zu gelangen, kann z.B. von einer Maschinensteuerung berechnet werden, da die Länge der Kabel 12 und die nach dem Austransportieren bzw. Befördern gewünschte Position des Fertigungsloses von Kabeln 12 bzw. der Kabel 12 bekannt sind. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### Bezugszeichenliste

1, 1' Kabelverarbeitungsmaschinensystem
2, 2` Richteinheit
3, 3' Kabelfördereinrichtung
5 Kabelverarbeitungsmaschine
7, 8, 7`, 8` Crimppresse
10, 10' Kontaktrolle
12 Kabel
13 Transportrichtung der Kabel
15, 15' Kabelverarbeitungsachse
20 Kabelablage
25, 25' Förderband
28' Entnahmewanne im Stand der Technik
30 Entnahmewanne
33 Ende der Entnahmewanne
35 Austransportband
40, 41 Seitenwand der Entnahmewanne
50 Umlenkrolle
52 Vorschubmotor
53 Verkleidung
55, 56 Bündelgreifer
58 Schiene der Bündelgreifer
60 Auflagefläche
65, 66 Seitenwand der Auflagefläche
70 Greifarm
80 Kabelgestell

## Patentansprüche

1. Kabelverarbeitungsmaschinensystem (1) umfassend eine Kabelverarbeitungsmaschine (5) zum Verarbeiten eines Kabels (12), eine Kabelablage (20) zum Aufnehmen von von der Kabelverarbeitungsmaschine (5) verarbeiteten Kabeln (12), und
eine Entnahmewanne (30), wobei die Kabelablage (20) derart schwenkbar ausgebildet ist, dass Kabel (12) aus der Kabelablage (20) beim Schwenken der Kabelablage (20) in die Entnahmewanne (30) gelangen,
**dadurch gekennzeichnet, dass**
die Entnahmewanne (30) ein bewegliches Austransportband (35) zum Befördern der Kabel (12) entlang einer Transportrichtung (13) weg von der Kabelverarbeitungsmaschine (5) zu einem Ende (33) der Entnahmewanne (30) umfasst.

2. Kabelverarbeitungsmaschinensystem (1) nach Anspruch 1, wobei die Entnahmewanne (30) Seitenwände (40, 41) aufweist.

3. Kabelverarbeitungsmaschinensystem (1) nach Anspruch 2, wobei die Seitenwände (40, 41) mit dem Austransportband (35) derart fest verbunden sind, dass die Seitenwände (40, 41) zusammen mit dem Austransportband (35) bewegt werden.

4. Kabelverarbeitungsmaschinensystem (1) nach Anspruch 2 oder 3, wobei die Seitenwände (40, 41) in einem Querschnitt parallel zu der Oberfläche des Austransportbands (35) jeweils eine ziehharmonikaartige Form aufweisen, so dass die Seitenwände (40, 41) entlang einer Richtung, die parallel zu der Transportrichtung (13) verläuft, zumindest teilweise gedehnt und gestaucht werden können, und die Entnahmewanne (30) eine Umlenkrolle (50) zum Umlenken des Austransportbands (35) und der Seitenwände (40, 41) aufweist.

5. Kabelverarbeitungsmaschinensystem (1) nach einem der vorhergehenden Ansprüche, wobei
die Entnahmewanne (30) an einem Ende (33) der Entnahmewanne (30) mindestens einen Bündelgreifer (55, 56), insbesondere zwei Bündelgreifer (55, 56), zum Greifen und Halten von einem oder mehreren Kabeln (12) aufweist.

6. Kabelverarbeitungsmaschinensystem (1) nach Anspruch 5, wobei der Bündelgreifer (55, 56) derart ausgebildet ist oder die Bündelgreifer (55, 56) derart ausgebildet sind, dass die Greifkraft, mit der jeweilige Bündelgreifer (55, 56) das eine oder die mehreren Kabeln (12) greift, einstellbar ist.

7. Kabelverarbeitungsmaschinensystem (1) nach einem der vorhergehenden Ansprüche, wobei
ein Abstand zwischen den Bündelgreifern (55, 56) in der Transportrichtung (13) zum Spannen eines Teils des Kabels (12) oder der Kabel (12) zwischen den Bündelgreifern (55, 56) vergrößerbar und verkleinerbar ist.

8. Kabelverarbeitungsmaschinensystem (1) nach einem der vorhergehenden Ansprüche, wobei
die Entnahmewanne (30) an dem Ende des Austransportbands (35), zu dem die Kabel (12) mittels des Austransportbands (35) befördert werden können, eine relativ zur Kabelablage (20) unbewegliche Auflagefläche (60) zum Unterstützen eines Teils des Kabels (12) oder der Kabel (12) aufweist.

9. Kabelverarbeitungsmaschinensystem (1) nach Anspruch 8, wobei die Entnahmewanne (30) die Auflagefläche (60) seitlich begrenzende Seitenwände (65, 66) aufweist.

10. Kabelverarbeitungsmaschinensystem (1) nach einem der vorhergehenden Ansprüche, wobei
das Austransportband (35) der Entnahmewanne (30) parallel zu einer Richtung bewegbar ist, die in eine Längsrichtung der Kabelablage (20) verläuft, wobei die Kabelablage (20) ihre größte Erstreckung entlang der Längsrichtung aufweist.

11. Kabelverarbeitungsmaschinensystem (1) nach einem der vorhergehenden Ansprüche, wobei
die Entnahmewanne (30) derart angeordnet und ausgebildet ist, dass die Entnahmewanne (30) sich weiter von der Kabelverarbeitungsmaschine (5) weg erstreckt als die Kabelablage (20).

12. Kabelverarbeitungsmaschinensystem (1) nach einem der vorhergehenden Ansprüche, wobei
sich die Transportrichtung (13) parallel zu einer Kabelverarbeitungsachse (15) erstreckt, entlang der die Kabel (12) während der Verarbeitung der Kabel (12) durch die Kabelverarbeitungsmaschine (5) bewegt werden.

13. Verfahren zum Entfernen eines oder mehrerer Kabel (12) aus einer Entnahmewanne (30) eines Kabelverarbeitungsmaschinensystems (1), insbesondere aus einer Entnahmewanne (30) eines Kabelverarbeitungsmaschinensystems (1) nach einem der Ansprüche 1-12, wobei das Verfahren folgende Schritte umfasst:
Bewegen eines oder mehrerer in der Entnahmewanne (30) befindlicher Kabel (12) mittels eines Austransportbands (35) weg von einer Kabelverarbeitungsmaschine (5) des Kabelverarbeitungsmaschinensystems (1) zu einem Ende (33) der Entnahmewanne (30); und
Greifen und Entnehmen des oder der sich am Ende (33) der Entnahmewanne (30) befindlichen Kabel (12) aus der Entnahmewanne (30) mittels eines Greifarms (70).

14. Verfahren nach Anspruch 13, wobei
das Kabel (12) oder die Kabel (12) von einem Bündelgreifer (55, 56) oder zwei Bündelgreifern (55, 56) an einem Ende (33) der Entnahmewanne (30) gehalten werden, während der Greifarm (70) das oder die Kabel (12) ergreift.

15. Verfahren nach Anspruch 14, wobei
das Kabel (12) oder die Kabel (12) von zwei Bündelgreifern (55, 56) unter Spannung gehalten wird/werden, während der Greifarm (70) das oder die Kabel (12) ergreift.

## Claims

1. A cable processing machine system (1), comprising
a cable processing machine (5) for processing a cable (12), a cable storage means (20) for receiving cables (12) processed by the cable processing machine (5), and
a removal trough (30), wherein the cable storage means (20) is designed so as to be pivotable such that cables (12) from the cable storage means (20) reach the removal trough (30) when the cable storage means (20) is pivoted,
**characterized in that**
the removal trough (30) comprises a movable exit conveyor belt (35) for conveying the cables (12) away from the cable processing machine (5) to one end (33) of the removal trough (30) along a transport direction (13).

2. The cable processing machine system (1) according to claim 1, wherein the removal trough (30) has sidewalls (40, 41).

3. The cable processing machine system (1) according to claim 2, wherein the sidewalls (40, 41) are firmly connected to the exit conveyor belt (35) in such a way that the sidewalls (40, 41) are moved together with the exit conveyor belt (35).

4. The cable processing machine system (1) according to claim 2 or 3, wherein the sidewalls (40, 41) each have an accordion-like shape in a cross section parallel to the surface of the exit conveyor belt (35), so that the sidewalls (40, 41) can be at least partially extended and compressed along a direction that runs parallel to the transport direction (13), and the removal trough (30) has a deflection roller (50) for deflecting the exit conveyor belt (35) and the sidewalls (40, 41).

5. The cable processing machine system (1) according to any of the preceding claims, wherein
the removal trough (30) has at least one bundle gripper (55, 56) at one end (33) of the removal trough (30), in particular two bundle grippers (55, 56), for gripping and holding one or more cables (12).

6. The cable processing machine system (1) according to claim 5, wherein the bundle gripper (55, 56) or the bundle grippers (55, 56) is/are designed such that the gripping force with which the respective bundle gripper (55, 56) grips the one or more cables (12) is adjustable.

7. The cable processing machine system (1) according to any of the preceding claims, wherein
a distance between the bundle grippers (55, 56) in the transport direction (13) for tensioning part of the cable (12) or cables (12) between the bundle grippers (55, 56) can be increased and decreased.

8. The cable processing machine system (1) according to any of the preceding claims, wherein
the removal trough (30) at the end of the exit conveyor belt (35) to which the cables (12) can be conveyed by means of the exit conveyor belt (35) has a support surface (60) which is immovable relative to the cable tray (20) for supporting part of the cable (12) or cables (12).

9. The cable processing machine system (1) according to claim 8, wherein the removal trough (30) has sidewalls (65, 66) laterally delimiting the support surface (60).

10. The cable processing machine system (1) according to any of the preceding claims, wherein
the exit conveyor belt (35) of the removal trough (30) can be moved parallel to a direction which runs in a longitudinal direction of the cable tray (20), the cable tray (20) having its greatest extent along the longitudinal direction.

11. The cable processing machine system (1) according to any of the preceding claims, wherein
the removal trough (30) is arranged and designed such that the removal trough (30) extends further away from the cable processing machine (5) than the cable tray (20).

12. The cable processing machine system (1) according to any of the preceding claims, wherein
the transport direction (13) extends parallel to a cable processing axis (15) along which the cables (12) are moved during the processing of the cables (12) by the cable processing machine (5).

13. A method for removing one or more cables (12) from a removal trough (30) of a cable processing machine system (1), in particular from a removal trough (30) of a cable processing machine system (1) according to any of claims 1-12, wherein the method comprises the following steps:
moving one or more cable (12) located in the removal trough (30) by means of an exit conveyor belt (35) away from a cable processing machine (5) of the cable processing machine system (1) to an end (33) of the removal trough (30); and
gripping and removal of the cable or the cables (12) located at the end (33) of the removal trough (30) from the removal trough (30) by means of a gripper arm (70).

14. The method according to claim 13, wherein
the cable (12) or cables (12) are held by a bundle gripper (55, 56) or two bundle grippers (55, 56) at one end (33) of the removal trough (30), while the gripper arm (70) grips the cable or cables (12).

15. The method according to claim 14, wherein
the cable (12) or cables (12) is/are held under tension by two bundle grippers (55, 56) while the gripper arm (70) grips the cable or cables (12).

## Revendications

1. Système de machine de traitement de câbles (1), comprenant une machine de traitement de câbles (5) pour le traitement d'un câble (12), un repose-câble (20) pour la réception de câbles (12) traités par la machine de traitement de câbles (5) et un bac de prélèvement (30), dans lequel le repose-câble (20) est conçu pivotant de telle sorte que des câbles (12) entrent dans le bac de prélèvement (30) depuis le repose-câble (20), par pivotement du repose-câble (20),
**caractérisé en ce que**
le bac de prélèvement (30) comprend une bande transporteuse de sortie (35) mobile pour le transport des câbles (12) le long d'une direction de transport (13), loin de la machine de traitement de câbles (5) vers une extrémité (33) du bac de prélèvement (30).

2. Système de machine de traitement de câbles (1) selon la revendication 1, dans lequel le bac de prélèvement (30) présente des parois latérales (40, 41).

3. Système de machine de traitement de câbles (1) selon la revendication 2, dans lequel les parois latérales (40, 41) sont fixement reliées à la bande transporteuse de sortie (35) de telle sorte que les parois latérales (40, 41) peuvent être déplacées conjointement avec la bande transporteuse de sortie (35).

4. Système de machine de traitement de câbles (1) selon la revendication 2 ou 3, dans lequel les parois latérales (40, 41) sont chacune en forme d'accordéon dans une section transversale parallèlement à la surface de la bande transporteuse de sortie (35), de telle sorte que les parois latérales (40, 41) peuvent être étirées et rétrécies au moins partiellement le long d'une direction s'étendant parallèlement à la direction de transport (13), et le bac de prélèvement (30) présente un rouleau de renvoi (50) destiné à dévier la bande transporteuse de sortie (35) et les parois latérales (40, 41).

5. Système de machine de traitement de câbles (1) selon l'une des revendications précédentes, dans lequel
le bac de prélèvement (30) présente, à une extrémité (33) du bac de prélèvement (30), au moins un préhenseur de faisceaux (55, 56), en particulier deux préhenseurs de faisceaux (55, 56) permettant de saisir et de tenir un ou plusieurs câbles (12).

6. Système de machine de traitement de câbles (1) selon la revendication 5, dans lequel le préhenseur de faisceaux (55, 56) est conçu ou les préhenseurs de faisceaux (55, 56) sont conçus de telle sorte que la force de préhension avec laquelle chaque préhenseur de faisceaux (55, 56) saisit le ou les câbles (12) peut être réglée.

7. Système de machine de traitement de câbles (1) selon l'une des revendications précédentes, dans lequel
une distance entre les préhenseurs de faisceaux (55, 56) peut être augmentée et réduite dans la direction de transport (13) pour tendre une partie du câble (12) ou des câbles (12) entre les préhenseurs de faisceaux (55, 56).

8. Système de machine de traitement de câbles (1) selon l'une des revendications précédentes, dans lequel
le bac de prélèvement (30) présente, à l'extrémité de la bande transporteuse de sortie (35) vers laquelle les câbles (12) peuvent être transportés à l'aide de la bande transporteuse de sortie (35), une surface d'appui (60) immobile par rapport au repose-câble (20) pour supporter une partie du câble (12) ou des câbles (12).

9. Système de machine de traitement de câbles (1) selon la revendication 8, dans lequel le bac de prélèvement (30) présente des parois latérales (65, 66) délimitant latéralement la surface d'appui (60).

10. Système de machine de traitement de câbles (1) selon l'une des revendications précédentes, dans lequel
la bande transporteuse de sortie (35) du bac de prélèvement (30) peut être déplacée parallèlement à une direction qui s'étend dans une direction longitudinale du repose-câble (20), dans lequel le repose-câble (20) présente sa dimension la plus grande le long de la direction longitudinale.

11. Système de machine de traitement de câbles (1) selon l'une des revendications précédentes, dans lequel
le bac de prélèvement (30) est disposé et conçu de telle sorte que le bac de prélèvement (30) s'étend plus loin de la machine de traitement de câbles (5) que le repose-câble (20).

12. Système de machine de traitement de câbles (1) selon l'une des revendications précédentes, dans lequel
la direction de transport (13) s'étend parallèlement à un axe de traitement de câble (15) le long duquel les câbles (12) sont déplacés par la machine de traitement de câbles (5) pendant le traitement des câbles (12).

13. Procédé de prélèvement d'un ou de plusieurs câbles (12) d'un bac de prélèvement (30) d'un système de machine de traitement de câbles (1), en particulier d'un bac de prélèvement (30) d'un système de machine de traitement de câbles (1) selon l'une des revendications 1 à 12, dans lequel le procédé comprend les étapes suivantes :
déplacement d'un ou de plusieurs câbles (12) se trouvant dans le bac de prélèvement (30), à l'aide d'une bande transporteuse de sortie (35), loin d'une machine de traitement de câbles (5) du système de machine de traitement de câbles (1) vers une extrémité (33) du bac de prélèvement (30) ; et
saisie et prélèvement du ou des câbles (12) se trouvant à l'extrémité (33) du bac de prélèvement (30) hors du bac de prélèvement (30) à l'aide d'un bras de préhension (70).

14. Procédé selon la revendication 13, dans lequel
le câble (12) ou les câbles (12) sont tenus par un préhenseur de faisceaux (55, 56) ou deux préhenseurs de faisceaux (55, 56) à une extrémité (33) du bac de prélèvement (30) pendant que le bras de préhension (70) saisit le ou les câbles (12).

15. Procédé selon la revendication 14, dans lequel
le câble (12) ou les câbles (12) est/sont tenus en tension par deux préhenseurs de faisceaux (55, 56) pendant que le bras de préhension (70) saisit le ou les câbles (12).
